# EUROPÄISCHE PATENTSCHRIFT

(11) **EP 2 708 580 B1**
(45) Veröffentlichungstag und Bekanntmachung des Hinweises auf die Patenterteilung: **18.03.2015**
(21) Anmeldenummer: 13182568.9
(22) Anmeldetag: 02.09.2013
(51) Int. Cl.: C09D 4/00, C08F 220/18

(54) **PHOTOREAKTIVES POLYMER**
Photo-reactive polymer
Polymère photoréactif

(30) Priorität: 12.09.2012 DE 102012216170
(43) Veröffentlichungstag der Anmeldung: 19.03.2014
(73) Patentinhaber: BASF SE, 67056 Ludwigshafen (DE); KIT Karlsruher Inst. of Technology BELLA Battery und Electrochemistry Laboratory, 76344 Karlsruhe (DE)
(72) Erfinder: Urban, Dieter, 67346 Speyer (DE); Licht, Ulrike, 68309 Mannheim (DE); Smit, Theo, 69117 Heidelberg (DE); Barner-Kowollik, Christopher, 76297 Stutensee-Blankenloch (DE); Delaittre, Guillaume, 68165 Mannheim (DE); Frick, Elena, 76137 Karlsruhe (DE)

(56) Entgegenhaltungen:
- EP-A1- 0 678 562
- EP-A1- 1 676 870
- WO-A1-2010/108752

## Beschreibung

Die Erfindung betrifft ein photoreaktives Polymer, herstellbar durch radikalische Polymerisation unter Verwendung von mindestens einem photoreaktiven Monomer, wobei das photoreaktive Monomer mindestens eine radikalisch polymerisierbare C-C-Doppelbindung, mindestens eine bestimmte hydrophile Gruppe und mindestens eine bestimmte photoreaktive Gruppe aufweist. Die Erfindung betrifft auch wässrige Zusammensetzungen, die dieses Polymer enthalten sowie Kombinationen dieses Polymers mit Verbindungen mit elektronenarmen Doppelbindungen zur photochemischen Vernetzung des Polymers.

Es ist bekannt, Polymerfilme aus wässrigen Polymerdispersionen z.B. aus Polyacrylatdispersionen zu bilden. Derartige Filme müssen oft zur Erreichung der notwendigen oder gewünschten anwendungstechnischen Eigenschaften so vernetzt werden, dass eine interpartikuläre Vernetzungsreaktion zwischen den Polymerpartikeln stattfindet. Dazu ist es erforderlich, reaktive Monomere so in der Emulsionspolymerisation umzusetzen, dass sie an der Partikeloberfläche sitzen. Außerdem ist häufig eine Vernetzung bei Raumtemperatur gewünscht, insbesondere bei Vernetzungsreaktionen, die auf temperaturempfindlichen Substraten erfolgen.

Es ist auch bekannt, Polymerfilme aus wässrigen Lösungen von wasserlöslichen Polymeren zu bilden. Filme aus wasserlöslichen Polymeren zeigen eine besonders hohe Wasserempfindlichkeit, die nur durch eine hohe Vernetzungsdichte gemindert werden kann. Solche Vernetzungsreaktionen benötigen in der Regel entweder hohe Temperaturen, lange Reaktionszeiten oder den Zusatz von stark toxischen Reagenzien, z.B. Aziridine.

Aufgabe der vorliegenden Erfindung war es, hydrophile, d.h. wasserlösliche oder wasserdispergierbare Polymere zur Verfügung zu stellen, mit welchen sich aus wässrigen Systemen heraus Filme bilden lassen, die bei niedrigen Temperaturen (z.B. Raumtemperatur) ohne Zusatz toxischer Verbindungen zu Filmen mit verbesserter Wasserbeständigkeit vernetzbar sind.

Gegenstand der Erfindung sind photoreaktive Polymere, herstellbar durch radikalische Polymerisation unter Verwendung von mindestens einem photoreaktiven Monomer wobei das photoreaktive Monomer
(i) mindestens eine radikalisch polymerisierbare C-C-Doppelbindung,
(ii) mindestens eine hydrophile Gruppe, ausgewählt aus einer Ethylenglykolgruppe und Polyethylenglykolgruppen mit mindestens 2 Ethylenglykoleinheiten und
(iii) mindestens eine photoreaktive Gruppe aufweist, wobei die photoreaktive Gruppe eine photoenolisierbare Carbonylgruppe ist.

Gegenstand der Erfindung ist auch eine wässrige Zusammensetzung, enthaltend ein erfindungsgemäßes photoreaktives Polymer in Wasser in gelöster oder dispergierter Form. Gegenstand der Erfindung sind auch vernetzte Polymere, herstellbar aus erfindungsgemäßen, photoreaktiven Polymeren durch photoinduzierte Vernetzung mit einer Verbindung mit mindestens zwei elektronenarmen Doppelbindungen.

Gegenstand der Erfindung ist auch ein Verfahren zur Herstellung vernetzter Polymere, wobei mindestens ein erfindungsgemäßes, photoreaktives Polymer sowie mindestens eine Verbindung mit mindestens zwei elektronenarmen Doppelbindungen zur Verfügung gestellt werden und photochemisch vernetzt wird.

Gegenstand der Erfindung ist auch die Verwendung von erfindungsgemäßen, photoreaktiven Polymeren zur Vernetzung von Filmen aus wässrigen Emulsionspolymerisaten und von Filmen aus wasserlöslichen Polymeren für Klebstoffe, Beschichtungen, Farben und Lacke, Tinten, Verdicker, Klebrigmacher-Harze, Schutzkolloide und Dispergiermittel.

Im Folgenden wird die Bezeichnung (Meth)acrylat und ähnliche Bezeichnungen als abkürzende Schreibweise verwendet für "Acrylat oder Methacrylat".

Der Begriff "photoreaktiv" betrifft Verbindungen, die photoinduzierte chemische Reaktionen eingehen können, d.h. deren chemische Reaktivität durch Lichteinwirkung erhöht wird.

Die photoreaktiven Monomere weisen mindestens eine, vorzugsweise eine einzige radikalisch polymerisierbare C-C-Doppelbindung auf. Geeignet sind z.B. Monomere, bei denen die radikalisch polymerisierbare C-C-Doppelbindung Teil einer Acrylat- oder Methacrylatgruppe ist.

Die photoreaktiven Monomere weisen außerdem mindestens eine hydrophile Gruppe auf. Die hydrophile Gruppe bewirkt, dass sich in Polymerdispersionen die räumlich benachbarte photoreaktive Gruppe zusammen mit der hydrophilen Gruppe an der Oberfläche von dispergierten Polymerpartikeln befindet und so für photoinduzierte Reaktionen mit Verbindungen, die sich in der wässrigen Phase befinden oder die auf der Oberfläche anderer Polymerpartikel angesiedelt sind, zur Verfügung stehen.

Bei der hydrophilen Gruppe handelt es sich um eine Gruppe mit einer oder mehreren Ethylenglykolgruppen, z.B. 2 bis 30, vorzugsweise 3 bis 30 oder 3 bis 20, insbesondere 4 bis 20 oder 4 bis 10 Ethylenglykolgruppen. Weist das übrige Monomer höhere Anteile an hydrophoben Strukturelementen auf, werden vorzugsweise mehr Ethylenglykolgruppen verwendet, z.B. mindestens 5 bis 20 oder mehr. Weist das übrige Monomer nur geringe Anteile an hydrophoben Strukturelementen auf, werden vorzugsweise weniger Ethylenglykolgruppen verwendet, z.B. 1 bis 20 oder 2 bis 10.

Die photoreaktiven Monomere weisen außerdem mindestens eine photoreaktive Gruppe auf, wobei die photoreaktive Gruppe vorzugsweise eine photoenolisierbare Carbonylgruppe ist. Eine photoenolisierbare Carbonylgruppe ist eine Keto- oder Aldehydgruppe, welche unter Lichteinwirkung in das jeweilige Tautomere Enol umgewandelt werden kann. Derartige Verbindungen werden im Folgenden auch abkürzend als "Photoenole" bezeichnet.

Bevorzugte photoenolisierbare Carbonylgruppen sind photoenolisierbare alpha-Aryl-Carbonylgruppen. Geeignet sind z.B. Verbindungen, bei denen die photoreaktive Gruppe abgeleitet ist von einer Struktureinheit der Formel 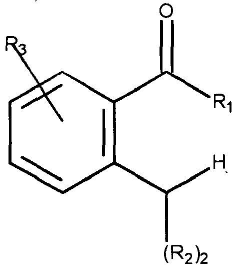 wobei R₁ für Wasserstoff oder einen organischen Rest steht, z.B. eine Alkyl- oder Arylgruppe, R₂ für Wasserstoff oder einen organischen Rest steht, z.B. eine Alkylgruppe, vorzugsweise Methyl und R₃ für die Substituenten des aromatischen Ringes steht, welche gleich oder voneinander verschieden sind und über eine oder mehrere Ringstrukturen miteinander verbunden sein können, z.B. Wasserstoff, Alkyl- oder Arylgruppen.

Bevorzugte photoreaktive Monomere sind Verbindungen mit der Struktur 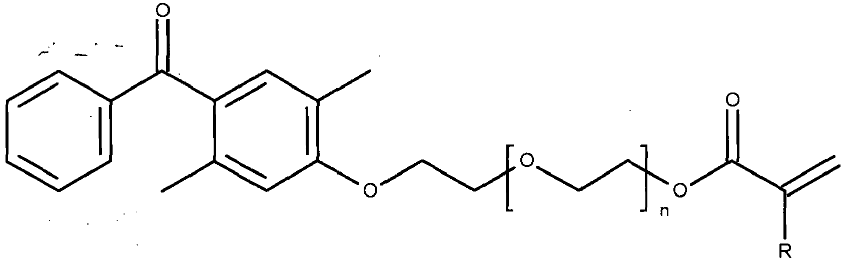 wobei n eine Zahl von 0 bis 29, vorzugsweise von 4 bis 19 bedeutet und R Wasserstoff oder Methyl bedeutet.

Verbindungen dieser Struktur werden bevorzugt ausgehend von einem Ethylenglykol mit der entsprechenden Anzahl an Ethylenglykolgruppen n = 0 bis 29 mit p-Toluolsulfonylchlorid umgesetzt. Anschließend erfolgt die Umsetzung mit einer Verbindung, die eine photoreaktive Gruppe enthält, wobei diese photoreaktive Gruppe wie oben beschrieben eine photoenolisierbare Carbonylgruppe ist. In der Folgereaktion erfolgt die Einbringung der radikalisch polymerisierbaren C-C-Doppelbindung durch Umsetzung mit einem (Meth)acryloylhalogenid, bevorzugt einem (Meth)acryloylchlorid. Alternativ kann die letzte Stufe auch die saure Versterung mit (Meth)-acrylsäure nach den bekannten Methoden erfolgen, wobei sich Katalysatoren wie beispielsweise saure Ionenaustauscher eignen. Alternativ dazu eignen sich auch enzymatische Katalysatoren wie beispielsweise eine Lipase aus *Candida Antarctica B,* die im Handel unter dem Namen Novozym 435 erhältlich sind.

Bevorzugte photoreaktive Monomere sind auch Verbindungen mit der Struktur 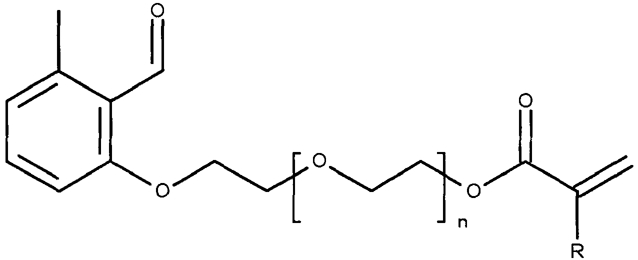 wobei n eine Zahl von 0 bis 19, vorzugsweise 1 bis 9 bedeutet und R Wasserstoff oder Methyl bedeutet.

Verbindungen dieser Struktur werden bevorzugt ausgehend von einem Poly(ethylenglykol)-(meth)acrylat hergestellt, d.h. diese Ausgangsverbindung enthält bereits die hydrohile Gruppe sowie die radikalisch polymerisierbare C-C-Doppelbindung. Anschließend wird dieses Edukt zur Einbringung der photoreaktiven Gruppe zunächst mit p-Toluolsulfonylchlorid umgesetzt und anschließend mit einer Verbindung, die eine photoreaktive Gruppe enthält, wobei diese photoreaktive Gruppe wie oben beschrieben eine photoenolisierbare Carbonylgruppe ist.

Bei dem erfindungsgemäßen Polymer kann es sich um ein Homopolymer handeln. Bevorzugt sind aber Copolymere, insbesondere Copolymere, in welchem das photoreaktive Monomer mit einem oder mehreren weiteren Monomeren, welche keine photoreaktiven Gruppentragen, copolymerisiert ist. In den Copolymeren wird das photoreaktive Monomer vorzugsweise zu mindestens 0,1 Gew.%, vorzugsweise zu 0,2 bis 40 Gew.%, bezogen auf die Summe aller Monomere eingesetzt.

Weitere Monomere für die Herstellung von Copolymeren sind beispielsweise ausgewählt aus C1 bis C20 Alkyl(meth)acrylaten, C1 bis C20 Hydroxyalkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen, Säuremonomeren oder Mischungen dieser Monomeren. Zu nennen sind z. B. (Meth)acrylsäurealkylester mit einem C1-C10-Alkylrest, wie Methyl(meth)acrylat, Ethyl(meth)-acrylat, Propyl(meth)acrylat, n-Butylacrylat, n-Hexylacrylat, Octylacrylat und 2-Ethylhexylacrylat oder auch Butadien sowie Mischungen dieser Monomere. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 2 bis 8 C-Atomen und ein oder zwei olefinischen Doppelbindungen seien Ethylen, Propylen, Isopren und Chloropren genannt. Als weitere Monomere besonders bevorzugt sind Methylacrylat, Methylmethacrylat, Ethylacrylat, Styrol, C1-C10-Hydroxyalkyl(meth)acrylate und (Meth)acrylamid sowie Mischungen dieser Monomere. In einer Ausführungsform werden 0-5 Gew.%, vorzugsweise 0,05 bis 5 Gew.% an C1-C10-Hydroxyalkyl(meth)acrylaten verwendet.

Das Polymer P1 wird vorzugsweise zu mindestens 0,1 Gew.%, vorzugsweise in Mengen von 0,1 bis 5, besonders bevorzugt 0,2 bis 4, ganz besonders bevorzugt 0,5 bis 3 Gew. %, bezogen auf die Gesamtmenge an Monomeren, aus Säuremonomeren gebildet. Säuremonomere sind ethylenisch ungesättigte, radikalisch polymerisierbare Monomere, welche mindestens eine Säuregruppe aufweisen. Säuremonomere sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende alpha,beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugt sind Acrylsäure und Methacrylsäure und deren Gemisch, besonders bevorzugt ist Acrylsäure.

Die weiteren Monomere werden insgesamt vorzugsweise in einer Menge von 60 bis 99,9 Gew.% eingesetzt und die photoreaktiven Monomere werden vorzugsweise in einer Menge von 0,1 bis 40 Gew.% eingesetzt.

Die photoreaktiven Monomere können beispielsweise hergestellt werden, indem eine mit einer Hydroxygruppe substituierte Verbindung, welche eine photoenolisierbare alpha-Aryl-Carbonylgruppe aufweist, an der Hydroxygruppe mit Polyethylenglykol verethert wird und anschließend durch Veresterung zum (Meth)acrylsäureester umgesetzt wird.

Die Polymerisation kann durch Emulsionspolymerisation oder durch Lösungspolymerisation erfolgen. Bei der Herstellung der Polymere durch Emulsionspolymerisation handelt es sich bei den Produkten dann um Emulsionspolymerisate, wobei die oben genannten ethylenisch ungesättigten, radikalisch polymerisierbaren Monomere durch radikalisch initiierte Emulsionspolymerisation in Wasser polymerisiert werden. Um die Dispergierung der Monomeren in dem wässrigen Medium zu unterstützen, kann man die üblicherweise als Dispergiermittel eingesetzten Schutzkolloide und/oder Emulgatoren verwenden.

Eine ausführliche Beschreibung geeigneter Schutzkolloide findet man in Houben-Weyl, Methoden der organischen Chemie, Band XIV/1, Makromolekulare Stoffe, Georg-Thieme-Verlag, Stuttgart, 1961, Seiten 411 bis 420. Als Emulgatoren kommen sowohl anionische, kationische als auch nichtionische grenzflächenaktive Stoffe in Betracht, deren zahlenmittleres Molekulargewicht üblicherweise unterhalb von 2000 g/mol oder vorzugsweise unterhalb von 1500 g/mol liegt, während das zahlenmittlere Molekulargewicht der Schutzkolloide oberhalb von 2000 g/mol liegt, beispielsweise von 2000 bis 100000 g/mol, insbesondere von 5000 bis 50000 g/mol. Vorzugsweise werden anionische und nichtionische Emulgatoren als grenz-flächenaktive Substanzen verwendet. Geeignete Emulgatoren sind beispielsweise ethoxylierte C₈- bis C₃₆-Fettalkohole mit einem Ethoxylierungsgrad von 3 bis 50, ethoxylierte Mono-, Di- und Tri- C₄- bis C₁₂-Alkylphenole mit einem Ethoxylierungsgrad von 3 bis 50, Alkalimetallsalze von Dialkylestern der Sulfobernsteinsäure, Alkalimetall- und Ammoniumsalze von C₈- bis C₁₂-Alkylsulfaten, Alkalimetall- und Ammoniumsalze von C₁₂- bis C₁₈-Alkylsulfonsäuren und Alkalimetall- und Ammoniumsalze von C₉- bis C₁₈-Alkylarylsulfonsäuren. Kationaktive Emulgatoren sind z.B. Verbindungen mit mindestens einer Amino- oder Ammoniumgruppe und mindestens einer C8-C22-Alkylgruppe. Falls Emulgatoren und/oder Schutzkolloide als Hilfsmittel zum Dispergieren der Monomeren mit verwendet werden, betragen die davon verwendeten Mengen beispielsweise 0,1 bis 5 Gew.-%, bezogen auf die Monomeren. Handelsnamen von Emulgatoren sind z. B. Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25. Die grenzflächenaktive Substanz wird üblicherweise in Mengen von 0,1 bis 10 Gew.-%, bezogen auf die zu polymerisierenden Monomeren verwendet.

Bei der Emulsionspolymerisation werden üblicherweise wasserlösliche Initiatoren für die radikalische Polymerisation der Monomere verwendet. Wasserlösliche Initiatoren für die Emulsionspolymerisation sind z. B. Ammonium- und Alkalimetallsalze der Peroxodischwefelsäure, z. B. Natriumperoxodisulfat, Wasserstoffperoxid oder organische Peroxide, z. B. tert.-Butylhydroperoxid. Geeignet sind auch sogenannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natrium-peroxodisulfat, tert-Butylhydroperoxid/Natriumdisulfit, tert-Butylhydroperoxid/Na-Hydroxy-methan-sulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung. Die Menge der Initiatoren beträgt im Allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können auch Polymerisationsregler, kurz Regler, eingesetzt werden. Regler bewirken eine Kettenabbruchsreaktion und verringern somit das Molgewicht des Polymeren. Die Regler werden dabei an das Polymer gebunden, im Allgemeinen an das Kettenende. Die Menge der Regler kann insbesondere 0,05 bis 4 Gew. Teile, besonders bevorzugt 0,05 bis 0,8 Gew.-Teile und ganz besonders bevorzugt 0,1 bis 0,6 Gew. Teile, bezogen auf 100 Gew.-Teile der zu polymerisierenden Monomeren betragen. Geeignete Regler sind insbesondere Verbindungen mit einer Mercaptogruppe wie tert.-Butylmercaptan, Thioglycolsäureethylester, Mercaptoethynol, Mercaptopropyltrimethoxysilan oder tert.-Dodecylmercaptan. Bei den Reglern handelt es sich im Allgemeinen um niedermolekulare Verbindungen mit einem Molgewicht kleiner 2000, insbesondere kleiner 1000 g/mol.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol, Ethanol oder Tetrahydrofuran bestehen. Vorzugsweise wird nur Wasser verwendet.

Die Monomerzufuhr kann als Batchprozess, kontinuierlich oder stufenweise erfolgen. Das Zulaufverfahren kann in Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Falls ein Molekulargewichtsregler verwendet wird, kann auch der Regler zum Teil vorgelegt werden, ganz oder teilweise während der Polymerisation oder gegen Ende der Polymerisation zugegeben werden.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81 083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Die Monomeren werden vorzugsweise zumindest teilweise während der Polymerisation kontinuierlich zugegeben. Zum Teil können Monomere auch im Polymerisationsgefäß vor Beginn der Polymerisation vorgelegt werden. Vorzugsweise werden maximal 30 Gew. % der Gesamtmenge der Monomeren, besonders bevorzugt maximal 20 Gew. %, ganz besonders bevorzugt maximal 10 Gew. % der Monomeren im Polymerisationsgefäß vorgelegt. Die übrigen Monomeren, d.h. vorzugsweise mindestens 70 Gew. %, besonders bevorzugt mindestens 80 Gew. %, ganz besonders bevorzugt mindestens 90 Gew. % werden während der Polymerisation kontinuierlich zugegeben. In einer besonderen Ausführungsform werden keine Monomeren vorgelegt, d.h. die Gesamtmenge der Monomere wird während der Polymerisation zugefahren. Die einzelnen Komponenten können dem Reaktor beim Zulaufverfahren von oben, in der Seite oder von unten durch den Reaktorboden zugegeben werden.

Zur Entfernung der Restmonomeren kann auch nach dem Ende der eigentlichen Emulsionspolymerisation, d. h. nach einem Umsatz aller Monomeren weiterer Initiator zugesetzt werden (chemische Desodorierung). Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten. Das so hergestellte Polymer wird vorzugsweise in Form seiner wässrigen Dispersion verwendet.

Die Größenverteilung der Dispersionsteilchen kann monomodal, bimodal oder multimodal sein. Bei monomodaler Teilchengrößenverteilung ist die mittlere Teilchengröße der in der wässrigen Dispersion dispergierten Polymerteilchen vorzugsweise kleiner 400 nm, insbesondere kleiner 200 nm. Besonders bevorzugt liegt die mittlere Teilchengröße zwischen 140 und 200 nm. Unter mittlerer Teilchengröße wird hier der d₅₀-Wert der Teilchengrößenverteilung verstanden, d.h. 50 Gew.-% der Gesamtmasse aller Teilchen haben einen kleineren Teilchendurchmesser als der d₅₀-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Bei bi- oder multimodaler Teilchengrößenverteilung kann die Teilchengröße bis zu 1000 nm betragen. Der pH-Wert der Polymerdispersion wird vorzugsweise auf pH größer 4,5, insbesondere auf einen pH-Wert zwischen 5 und 8 eingestellt.

Gegenstand der Erfindung sind auch wässrige Zusammensetzungen, enthaltend mindestens ein erfindungsgemäßes Polymer in Wasser in gelöster oder dispergierter Form. In einer Ausführungsform enthält die Zusammensetzung zusätzlich mindestens eine Verbindung, die unter Lichteinwirkung (vorzugsweise nach Filmbildung oder nach Beschichtung eines Substrates) mit den photoreaktiven Gruppen des Polymers reagieren kann und so z.B. Pfropfungs-, Verzweigungs- oder Vernetzungsprodukte bildet. Besonders bevorzugt enthält die Zusammensetzung mindestens eine Verbindung mit mindestens einer oder mindestens zwei, vorzugsweise genau zwei elektronenarmen Doppelbindungen. Aus einer photoenolisierbaren alpha-Aryl-Carbonylgruppe lässt sich durch Photoisomerisierung die Enolform herstellen, welche mit einer Verbindung mit elektronenarmer Doppelbindung in einer Diels-Alder Reaktion ein Additionsprodukt bilden kann. Das Reaktionsprinzip ist:

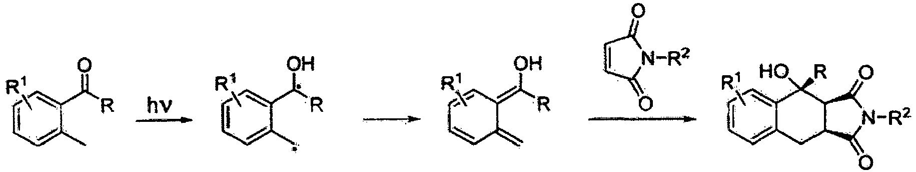

Elektronenarme Doppelbindungen sind z.B. Doppelbindungen mit mindestens einem, vorzugsweise zwei elektronenziehenden Gruppen, z.B. Carbonsäuren, Carbonsäureamide, Carbonsäureester, Lactone, Imide, Nitrile etc.

Geeignete Verbindungen mit elektronenarmen Doppelbindungen sind z.B. Verbindungen mit Struktureinheiten, die abgeleitet sind von Maleinsäure, Maleinsäureanhydrid, Fumarsäure, Maleimide, Maleinsäuremono- oder -diester, Fumarsäuremono- oder -diester, Acrylester, Acrylamide, Itaconsäureester, Die Menge an Verbindungen mit elektronenarmen Doppelbindungen wird so gewählt, dass maximal ein äquimolares Verhältnis von Photoenolgruppen und elektronenarmen Doppelbindungen besteht, vorzugsweise wird der Vernetzer eher im Unterschuss eingesetzt.

Vorzugsweise ist die Verbindung mit elektronenarmer Doppelbindung wasserlöslich, d.h. sie liegt in der wässrigen Zusammensetzung (bei 20°C) in gelöster Form vor. Die Wasserlöslichkeit kann z.B. 1 bis 10 g/l bei 20°C betragen.

Bevorzugte Verbindungen mit elektronenarmen Doppelbindungen sind Bismaleimide, insbesondere Bismaleimide, bei denen zwei endständige Maleimidgruppen über eine Spacergruppe, beispielsweise eine Polyalkylenglykolgruppe verknüpft sind. Die Polyalkylenglykolgruppe ist vorzugsweise eine Polyethylenglykolgruppe mit mindestens einer, z.B. 1 bis 20, vorzugsweise mindestens zwei Ethylenglykoleinheiten.

Die erfindungsgemäße wässrige Zusammensetzung kann noch weitere Additive enthalten. Die Additive sind z.B. ausgewählt aus Füllstoffen, Farbstoffen, Verlaufshilfsmitteln, Verdickern, vorzugsweise Assoziativverdickern, Entschäumern, Weichmachern, Pigmenten, Netzmitteln, UV-Schutzmitteln und Tackifiern. Für eine bessere Benetzung von Oberflächen können die Zusammensetzungen insbesondere Benetzungshilfsmittel, z. B. Fettalkohdethoxylate, Alkylphenolethoxylate, Sulfobernsteinsäure-ester, Nonylphenolethoxylate, Polyoxyethylene/-propylene oder Natriumdodecylsulfonate enthalten. Die Menge an weiteren Additiven beträgt im allgemeinen 0,05 bis 5 Gew.-Teile, insbesondere 0,1 bis 3 Gew.-Teile auf 100 Gew.-Teile Polymer (fest).

Gegenstand der Erfindungen sind auch vernetzte Polymere, z.B. in Form von Polymerfilmen, Schichten oder Überzügen, herstellbar aus einem erfindungsgemäßen, photoreaktiven Polymer durch photoinduzierte Vernetzung mit einer Verbindung mit mindestens zwei elektronenarmen Doppelbindungen.

Gegenstand der Erfindung ist auch ein Verfahren zur Herstellung vernetzter Polymere (z.B. in Form von Polymerfilmen, Schichten oder Überzügen), wobei mindestens ein erfindungsgemäßes, photoreaktives Polymer sowie mindestens eine Verbindung mit mindestens zwei elektronenarmen Doppelbindungen zur Verfügung gestellt werden und photochemisch vernetzt werden. Das unvernetzte Polymer wird vorzugsweise in Form einer wässrigen Polymerlösung oder in dispergierter Form als Polymerdispersion zur Verfügung gestellt. Aus der Polymerlösung bzw. aus der Polymerdispesion wird ein Film oder eine Beschichtung hergestellt, getrocknet und vernetzt. Vorzugsweise wird das photoreaktive Polymer durch Emulsionspolymerisation hergestellt.

Die Gegenstände der Erfindung können im Bereich der filmbildenden Produkte (Klebstoffe, Beschichtungen, Farben und Lacke) verwendet werden. Die Erfindungen können die Stabilität der Filme erhöhen durch die Anwendung von Licht, es wird keine hohe Temperatur benötigt. Die Erfindungen besitzen Einsatzmöglichkeiten in wässrigen Emulsionspolymerisaten verschiedener Anwendungen zur Modifizierung der Teilchenoberflächen oder der daraus gebildeten Filme. Produkte wären z.B. Klebstoffe, deren Klebekraft durch Bestrahlung mit Licht verstärkt wird. Weitere Produkt wären Farben oder Lacke, die nach der Bestrahlung mit Licht eine höhere Abriebfestigkeit besitzen und wasserunlöslich sind.

### Beispiele

### Beispiel 1: Synthese von Photoenol-Monomer 1

### Syntheseschema:

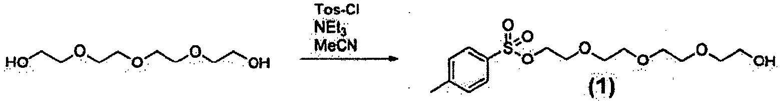

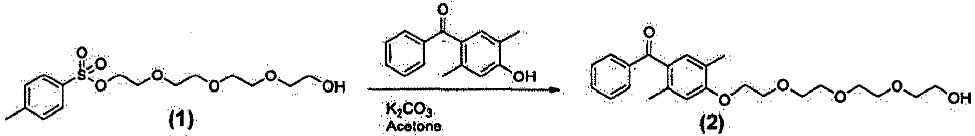

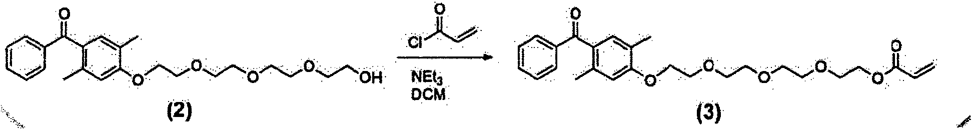

### Synthese von Tos-PEG-OH (1):

Tetraethylenglykol (15 g, 77,2 mmol) werden in 220 ml Acetonitril gelöst. Triethylamine wird unter Stickstoffatmosphäre tropfenweise zugegeben. Anschließend wird p-Toluolsulfonylchlorid (14,718 g, 77,2 mmol), gelöst in 75 ml Acetonitril, tropfenweise bei 0°C zugegeben. Nach 12 h Rühren bei Raumtemperatur wird filtriert und das Lösungsmittel unter vermindertem Druck ertfernt. Reinigung durch Flash-Chromatographie (Silicagel, Chloroform + 10% Methanol, Rf = 0,68) gibt ein gelbes Öl (Ausbeute: 31 %).
¹H-NMR (CDCl₃, 250 MHz):δ/ppm: 2,37 (s, 3H, CH₃), 2,68 (bs, 1 H, OH), 3,50-3,65 (m, 14H, CH₂O), 4,09 (t, 2H, CH₂O), 7,29 (d, 2H, Hₐᵣ), 7,70 (d, 2H, Hₐᵣ).

### Synthese von PE-PEG-OH (2):

4-Hydroxy-2,5-dimethyl-phenyl-phenylmethanon (Photoenol 1, 16,956 g, 74,9 mmol) wird in 140 ml wasserfreiem Aceton unter Stickstoffatmosphäre gelöst. Anschließend wird K₂CO₃ (10,352 g, 74,9 mmol) zugefügt. Eine Lösung von (1) (15,358 g, 44,1 mmol) in 40 ml wasserfreiem Aceton wird tropfenweise bei Raumtemperatur zugegeben. Die Mischung wird für 39 h bei 60°C unter Rückfluss erhitzt. Nach Abkühlen auf Raumtemperatur wird filtriert und das Lösungsmittel unter vermindertem Druck entfernt. Reinigung durch Flash-Chromatographie (Silicagel, Et₂O + 10% Methanol, Rf = 0,53) gibt ein leicht gelbes Öl (Ausbeute: 61 %).
¹H-NMR (CDCl₃, 250 MHz):δ/ppm: 2,10 (s, 3H, CH₃), 2,29 (s, 3H, CH₃), 2,42 (bs, 1H, OH), 3,51-3,71 (m, 12H, CH₂O), 3,83 (t, 2H, CH₂O), 4,13 (t, 2H, CH₂O), 6,65 (s, 1H, Hₐᵣ), 7,08 (s, 1H, Hₐᵣ), 7,33-7,40 (m, 2H, Hₐᵣ), 7,45-7,51 (m, 1H, Hₐᵣ), 7,67-7,71 (m 2H, Hₐᵣ).

### Synthese von PE-PEG-Acrylat (3):

Acryloylchlorid (1 ml, 12,4 mmol) wird in 10 ml wasserfreiem Dichlormethan unter Stickstoffatmosphäre gelöst. Eine Lösung von (2) ( 2 g, 4,97 mmol) und Triethylamin (2,08 ml, 14,9 mmol) in 15 ml wasserfreiem Dichlormethan werden tropfenweise bei 0°C zugegeben. Nach der Zugabe wird auf Raumtemperatur erwärmen gelassen und für 24 h gerührt. Die Lösung wird mit Wasser (2 x 25 ml) und Salzlösung (2 x 25 ml) gewaschen und über MgSO₄ getrocknet. Das Lösungsmittel wird unter vermindertem Druck entfernt. Reinigung durch Flash-Chromatographie (Silicagel, Et₂O + 5% Methanol, Rf = 0,80) gibt ein leicht gelbes Öl (Ausbeute: 72%).
¹H-NMR (CDCl₃, 250 MHz):δ/ppm: 2,10 (s, 3H, CH₃), 2,30 (s, 3H, CH₃), 3,61-3,72 (m, 10H, CH₂O), 3,84 (t, 2H, CH₂O), 4,13 (t, 2H, CH₂O), 4,25 (t, 2H, CH₂O), 5,76 (dd, 1 H, CH), 6,08 (dd, 1 H, CH), 6,36 (dd, 1 H, CH), 6,64 (s, 1 H, Hₐᵣ), 7,08 (s, 1 H, Hₐᵣ), 7,35-7,41 (m, 2H, Hₐᵣ), 7,46-7,52 (m, 1 H, Hₐᵣ), 7,67-7,71 (m 2H, Hₐᵣ).

### Beispiel 2: Synthese Bismaleimid-Vernetzer

### Syntheseschema:

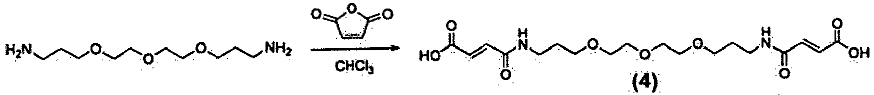

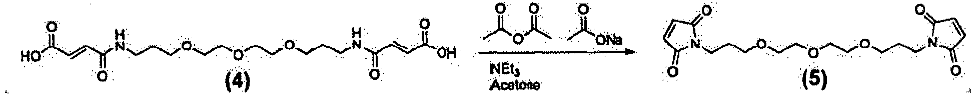

### Synthese von Verbindung (4):

Maleinsäureanhydrid (8,902 g, 90,8 mmol) wird in 50 ml Chloroform gelöst. Eine Lösung von 4,7,10-Trioxa-1,13-tridecandiamin (9,95 ml, 45,4 mmol) in 5 ml Chloroform wird tropfenweise bei 0 °C zugegeben. Nach der Zugabe wird auf Raumtemperatur erwärmen gelassen und für 12 h gerührt. Entfernung des Lösungsmittels unter vermindertem Druck ergibt ein gelbes Öl als Rohprodukt, welches ohne weitere Reinigung weiterverwendet wird.

### Synthese von Verbindung (5):

Triethylamin (2,988 g, 29,5 mmol), Natriumacetat (2,83 g, 34,5 mmol) und Acetanhydrid (29,43 g, 288,3 mmol)werden zu einer Lösung von (4) (18,906 g, 45,4 mmol) in 80 ml Acetone zugegeben. Die Mischung wird unter Rückfluss auf 70°C erwärmt und nach 3 h langsam abgekühlt. Nach Filtration wird das Lösungsmittel unter vermindertem Druck unter Bildung eines braunen Öls entfernt. Zur Entfernung von Essigsäure und Acetanhydrid werden 50 ml Wasser zugegeben und die Mischung wird 3 Tage bei Raumtemperatur gerührt. Anschließende Extraktion mit Dichlormethan, Trocknen über MgSO₄ und Entfernung des Lösungsmittels unter vermindertem Druck ergibt ein braunes Öl als Rohprodukt. Reinigung durch Flash-Chromatographie (Silicagel, Et₂O + 2% Methanol, Rf = 0,44) gibt einen weißlichen Feststoff (Ausbeute: 52%).
¹H-NMR (D₂O, 250 MHz):δ/ppm: 1,96 (dd, 4H, CH₂), 3,61-3,76 (m, 16H, CH₂N und CH₂O), 6,95 (s, 4H, CH).

### Beispiel 3: Synthese von Photoenol-Monomer 2

### Syntheseschema:

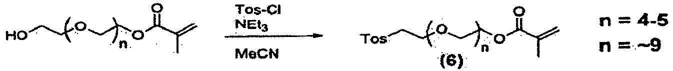

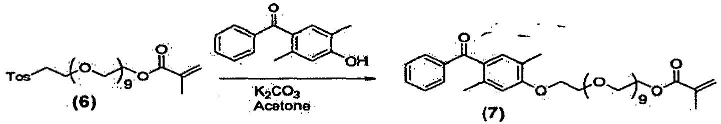

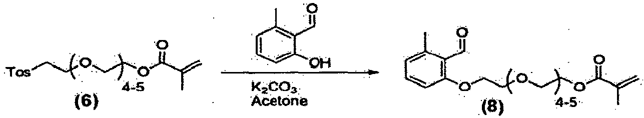

### Synthese von Verbindung (6):

Beschrieben wird die Synthese für n = 4-5; für n = 9 kann das gleiche Herstellverfahren angewendet werden.
Triethylamin (4,28 ml, 30,7 mmol) wird unter Stickstoffatmosphäre zu einer Lösung von Poly (ethylenglykol)methacrylat (Mn = 360, 11,05 g, 30,7 mmol) in 100 ml Acetonitril gegeben. p-Toluolsulfonylchlorid (5,852 g, 30,7 mmol) wird in 50 ml Acetonitril gelöst und tropfenweise bei 0 °C zugegeben. Nach der Zugabe wird auf Raumtemperatur erwärmen gelassen und für 12 h gerührt. Die Lösung wird filtriert und nach Zugabe von Hydrochinon (0,3 g) wird das Lösungsmittel unter vermindertem Druck bei 25 °C entfernt. Das Rohprodukt wird ohne weitere Reinigung weiterverwendet.

### Synthese von Verbindung (7):

4-Hydroxy-2,5-dimethyl-phenyl-phenylmethanon (Photoenol 1, 0,7976 g, 3,53 mmol) wird in 15 ml wasserfreiem Aceton gelöst. Hydrochinon (0,1 g) und K₂CO₃ (0,69 g, 4,99 mmol) werden zugefügt. Nach tropfenweiser Zugabe einer Lösung von (6) (n = 9, 2,0 g, 2,94 mmol) in 25 ml wasserfreiem Aceton bei Raumtemperatur wird die Mischung für 22 h bei 60°C unter Rückfluss erhitzt. Das Lösungsmittel wird unter vermindertem Druck entfernt unter Bildung eines dunkelbraunen Öls.

### Synthese von Verbindung (8):

2-Hydroxy-6-methyl-benzaldehyd (Photoenol 2, 2,0 g, 14,7 mmol) wird in 40 ml wasserfreiem Aceton gelöst. Hydrochinon (0,1 g) und K₂CO₃ (3,385 g, 24,5 mmol) werden zugefügt. Nach tropfenweiser Zugabe einer Lösung von (6) (n = 4-5 6,273 g, 12,2 mmol) in 30 ml wasserfreiem Aceton bei Raumtemperatur wird die Mischung für 18 h bei 60°C unter Rückfluss erhitzt. Das Lösungsmittel wird unter vermindertem Druck entfernt unter Bildung eines dunkelbraunen Öls.

### Beispiel 4: Copolymerisation von Photoenol-Monomer 2 mit MMA und nBA

Durch Emulsionspolymerisation werden polymere Nanopartikel hergestellt aus Methylmethacrylat und n-Butylacrylat. Nach einem Umsatz von 85% wird ein drittes Monomer injiziert: Photoenol 2-Monomer (Verbindung (8), s.o.). Die durch ¹H-NMR bestimmte Reinheit des Monomers ist ca. 70%.

In einem 3-Halskolben mit Rückflusskühler und Thermometer wird eine Mischung von Methylmethacrylat (3,93 g) und n-Butylacrylat (5,27 g) zu eine wässrigen Lösung von Natriumdodecylsulfat (0,3564 g in 18.15 ml) gegeben. Die Emulsion wird bei 250 rpm gerührt und durch Durchleiten von Stickstoff innerhalb von 30 Minuten von Sauerstoff befreit. In einem kleinen Kolben wird eine wässrige Lösung von Natriumpersulfat (0,0501 g in 0,5 ml) durch Durchleiten von Stickstoff innerhalb von 30 Minuten von Sauerstoff befreit. Die Emulsion wird auf 60 °C erwärmt, anschließend wird die Initiatorlösung zum Starten der Polymerisation zugegeben. Nach 24 Minuten wird eine Mischung von Photoenol 2-Monomer (0,5 g, Verbindung (8), s.o.), Wasser (2 ml) und Natriumpersulfat (0,00371 g), durch welche für 30 Minuten Stickstoff durchgeleitet worden ist, zu der Emulsion zugegeben. Nach 3 h wird die Polymerisation abgebrochen durch Abkühlen auf Raumtemperatur und Aussetzen von Sauerstoff. Die Dispersion wird durch einen Papierfilter filtriert zur Abtrennung von Spuren von ausgefallenem Polymer.

### Beispiel 5: Homopolymerisation von Photoenol-Monomer 1

Photoenol-Monomer 1 (0,7581 g, 1,66 mmol; Verbindung (3), s.o.) wird in 1 ml 2-Butanon gelöst. Nach Zugabe von 1 ml Stammlösung von Azoisobutyronitril in 2-Butanon (0,0023 g, 0,00138 mmol, 5 mmol/l) wird die Reaktionslösung durch 4 freeze-pump-thaw Zyklen entgast und anschließend in ein Ölbad von 70 °C eingebracht. Die Reaktionslösung wird mit einer Aluminiumfolienabdeckung vor Licht geschützt. Nach 26,5 h wird die Reaktionslösung in THF gelöst und das Polymer durch Ausfällen in kaltem Diethylether isoliert. Der durch ¹H-NMR bestimmte Umsatz beträgt 97%.
THF-GPC (PS-Kalibrierung): Mₙ = 19000 g/mol, M_{w} = 39500 g/mol, PDI = 2,07
THF-GPC (PMMA-Kalibrierung): Mₙ = 18800 g/mol, M_{w} = 39900 g/mol, PDI = 2,12

### Beispiel 6: ATRP von Photoenol-Monomer 1

Methyl-2-brompropionat (0,006 ml, 0,00548 mmol, 1 eq) und PMDETA (0,0086 ml, 0,00411 mmol, 0,75 eq) werden zu einer Lösung von Photoenol-Monomer 1 (0,50 g, 1,095 mmol, 20 eq; Verbindung (3), s.o.) in 0,595 ml 2-Butanon gegeben. Die Reaktionslösung wird durch 3 freeze-pump-thaw Zyklen entgast. Beim letzten Zyklus wird Kupfer(I)bromid (0,0039 g, 0,00274 mmol, 0,5 eq) zugegeben. Anschließend wird der Reaktionskolben in ein Ölbad von 70 °C eingebracht und mit einer Aluminiumfolienabdeckung vor Licht geschützt. Nach 12 h wird die Reaktion abgebrochen durch Abkühlen auf Raumtemperatur und Aussetzen von Sauerstoff. Der durch ¹H-NMR bestimmte Umsatz beträgt 36%.
THF-GPC (PS-Kalibrierung): Mₙ = 3400 g/mol, M_{w} = 3700 g/mol, PDI = 1,08
THF-GPC (PMMA-Kalibrierung): Mₙ = 3100 g/mol, M_{w} = 3300 g/mol, PDI = 1,08

### Beispiel 7: Beschichtung, Filmbildung

Beschichtungen mit Photoenol-Polymerdispersionen, hergestellt analog Beispiel 4, aber mit dem Photoenol-Monomer 1 (Beispiel 1, Verbindung (3)) als Comonomer (40 Gew% Methylmethacrylat, 55 Gew% n-Butylacrylat, 5 Gew% Photoenol-Monomer 1), erfolgen in Petrischalen aus Polystyrol mit einem Durchmesser von ca. 4 cm. Dabei wird eine bestimmte Menge der Polymerdispersionen in die Petrischale gegossen und vor Lichteinfall geschützt bei Raumtemperatur an der Luft getrocknet (mind. 1 Tag). Dies ergibt einen durchsichtigen und gleichmäßigen Film. Schichtdicke ca. 0,2 bis 0,3 mm.

### Beispiel 8: Vernetzung

Für Vernetzungsexperimente werden die Polymerdispersionen vor dem Beschichten mit einem zwei endständige *N*-Maleimidgruppen aufweisenden Crosslinker (Beispiel 2) versetzt. Hierfür wird zunächst der Crosslinker in einem kleinen Glasgefäß durch Erwärmen mit einem ca. 60 bis 70 °C warmen Luftstrom geschmolzen. Anschließend wird in dieses Glasgefäß eine bestimmte Menge an Photoenol-Polymerdispersion zugegeben, sodass der Gehalt an Crosslinker 1 oder 2 Gew.% bezogen auf die Polymermenge des Emulsionspolymerisates beträgt, und es wird etwa 10 min lang gerührt. Danach wird die Polymerdispersion in Polystyrol-Petrischalen gegossen und bei Raumtemperatur und vor Lichteinfall geschützt an der Luft getrocknet (mind. 1 Tag). Dies ergibt durchsichtige und gleichmäßige Filme. Die getrockneten Filme werden in einem Photoreaktor 5 oder 10 h lang durch Rotation der vertikal befestigten Petrischalen um eine UV-Lampe bestrahlt. Nach der Bestrahlung zeigen die Filme eine erhöhte Festigkeit. Schichtdicke ca. 0,2 bis 0,3 mm.

### Beispiel 9: Speichermodul-Messungen

An analog zu den Beispielen 7 und 8 hergestellten Filmen einer Dicke von ca. 0,8 bis 1,0 mm wurde der Speichermodul G' gemessen.
Probe 9A: enthaltend 2 Gew.% Maleimid-crosslinker (Beispiel 2); 10 h Bestrahlung
Probe 9B: ohne Maleimid-Crosslinker; 10 h Bestrahlung
Die Messungen erfolgen durch Dynamisch-Mechanische Thermo-Analyse (DMTA). Messinstrument: deformationsgesteuertes modulares Rheometersystem Ares; Parallel-Platte-Geometrie mit Durchmesser 8 mm.
Dynamischer Schubmodul, Messfrequenz 1 Hz, Heizrate 2°C/min, Messtemperatur -20°C bis +200 °C.
Die Ergebnisse (Mittelwerte aus 2-3 Messungen) sind in Tabelle 1 aufgeführt.

**Tabelle1: Speichermodul G'**

| Probe | G' [Pa] bei 0°C | G' [Pa] bei 80°C | G' [Pa] bei 120°C | G' [Pa] bei 180°C |
|---|---|---|---|---|
| 9A | 1,6 * 10⁸ | 2,3 * 10⁵ | 1,8 * 10⁵ | 1,7 * 10⁵ |
| 9B | 1,2 * 10⁸ | 1,4 * 10⁵ | 1,1 * 10⁵ | 0,96 * 10⁵ |

Die Probe 9A weist insbesondere bei höheren Temperaturen ein deutlich größeres Speichermodul G' auf als die unvernetzte Probe 9B. Dies kann als deutlicher Hinweis auf eine Vernetzung über den Photoenolmechanismus gedeutet werden.

## Patentansprüche

1. Photoreaktives Polymer, herstellbar durch radikalische Polymerisation unter Verwendung von mindestens einem photoreaktiven Monomer
wobei das photoreaktive Monomer
(i) mindestens eine radikalisch polymerisierbare C-C-Doppelbindung,
(ii) mindestens eine hydrophile Gruppe, ausgewählt aus einer Ethylenglykolgruppe und Polyethylenglykolgruppen mit mindestens 2 Ethylenglykoleinheiten und
(iii) mindestens eine photoreaktive Gruppe aufweist, wobei die photoreaktive Gruppe eine photoenolisierbare Carbonylgruppe ist.

2. Polymer gemäß Anspruch 1, **dadurch gekennzeichnet, dass** die radikalisch polymerisierbare C-C-Doppelbindung Teil einer Acrylat- oder Methacrylatgruppe ist.

3. Polymer gemäß einem der vorhergehenden Ansprüche, **dadurch gekennzeichnet, dass** die hydrophile Gruppe eine Gruppe mit 2 bis 30, vorzugsweise 3 bis 30 Ethylenglykolgruppen ist.

4. Polymer gemäß einem der vorhergehenden Ansprüche, **dadurch gekennzeichnet, dass** die photoreaktive Gruppe eine photoenolisierbare alpha-Aryl-Carbonylgruppe ist.

5. Polymer gemäß einem der vorhergehenden Ansprüche, **dadurch gekennzeichnet, dass** die photoreaktive Gruppe abgeleitet ist von einer Struktureinheit der Formel 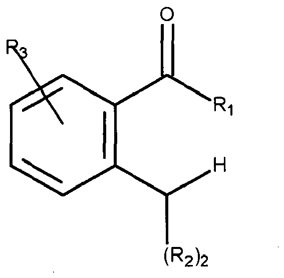 wobei R₁ für Wasserstoff oder einen organischen Rest steht, R₂ für Wasserstoff oder einen organischen Rest steht und R₃ für Substituenten des aromatischen Ringes steht, welche gleich oder voneinander verschieden sind und über eine oder mehrere Ringstrukturen miteinander verbunden sein können.

6. Polymer gemäß einem der vorhergehenden Ansprüche, **dadurch gekennzeichnet, dass** das photoreaktive Monomer ausgewählt ist aus Verbindungen mit der Struktur 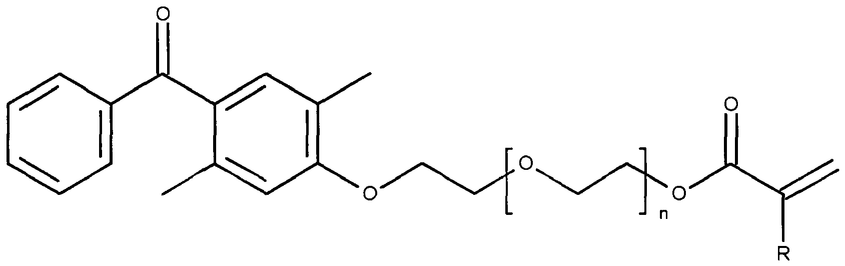 wobei n eine Zahl von 0 bis 29, vorzugsweise von 4 bis 19 bedeutet und R Wasserstoff oder Methyl bedeutet,
oder Verbindungen mit der Struktur 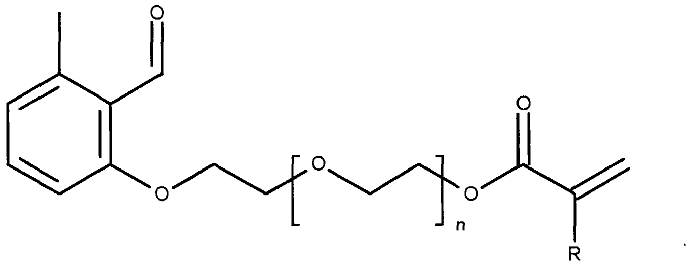 wobei n eine Zahl von 0 bis 19, vorzugsweise 1 bis 9 bedeutet und R Wasserstoff oder Methyl bedeutet.

7. Polymer gemäß einem der vorhergehenden Ansprüche, **dadurch gekennzeichnet, dass** das Polymer ein Homopolymer ist oder dass das Polymer ein Copolymer ist, wobei das photoreaktive Monomer zu mindestens 0,1 Gew.%, vorzugsweise zu 0,2 bis 40 Gew.%, bezogen auf die Summe aller Monomere eingesetzt wird.

8. Polymer gemäß einem der vorhergehenden Ansprüche, **dadurch gekennzeichnet, dass** das Polymer ein Copolymer ist, wobei das photoreaktive Monomer copolymerisiert ist mit mindestens einem weiteren Monomer ausgewählt aus C1 bis C20 Alkyl(meth)acrylaten, C1 bis C20 Hydroxyalkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen, Säuremonomeren oder Mischungen dieser Monomeren.

9. Polymer gemäß dem vorhergehenden Anspruch, **dadurch gekennzeichnet, dass** die weiteren Monomere in einer Menge von 60 bis 99,9 % und die photoreaktiven Monomere in einer Menge von 0,1 bis 40 Gew.% eingesetzt werden.

10. Wässrige Zusammensetzung, enthaltend mindestens ein Polymer gemäß einem der vorhergehenden Ansprüche in Wasser in gelöster oder dispergierter Form.

11. Zusammensetzung nach dem vorhergehenden Anspruch, **dadurch gekennzeichnet, dass** die Zusammensetzung zusätzlich mindestens eine Verbindung mit mindestens einer elektronenarmen Doppelbindung enthält.

12. Zusammensetzung nach dem vorhergehenden Anspruch, **dadurch gekennzeichnet, dass** die Verbindung mindestens zwei elektronenarme Doppelbindungen aufweist.

13. Zusammensetzung nach einem der Ansprüche 11 bis 12, **dadurch gekennzeichnet, dass** die Verbindung ausgewählt ist aus Verbindungen mit Struktureinheiten, die abgeleitet sind von Maleinsäure, Maleinsäureanhydrid, Fumarsäure, Maleimide, Maleinsäuremono- oder - diester, Fumarsäuremono- oder -diester, Acrylester, Acrylamide, Itaconsäureester.

14. Vernetztes Polymer, herstellbar aus einem Polymer gemäß einem der Ansprüche 1 bis 9 durch photoinduzierte Vernetzung mit einer Verbindung mit mindestens zwei elektronenarmen Doppelbindungen.

15. Verfahren zur Herstellung vernetzter Polymere, wobei mindestens ein Polymer gemäß einem der Ansprüche 1 bis 9 sowie mindestens eine Verbindung mit mindestens zwei elektronenarmen Doppelbindungen zur Verfügung gestellt werden und photochemisch vernetzt wird.

16. Verfahren nach dem vorhergehenden Anspruch , **dadurch gekennzeichnet, dass** das Polymer durch Emulsionspolymerisation hergestellt wird.

17. Verwendung von Polymeren gemäß einem der Ansprüche 1 bis 9 für Klebstoffe, Beschichtungen, Farben, Lacke, Tinten, Verdicker, Klebrigmacher-Harze, Schutzkolloide und Dispergiermittel.

## Claims

1. A photoreactive polymer preparable by radical polymerization using at least one photoreactive monomer,
where the photoreactive monomer has
(i) at least one radically polymerizable C-C double bond,
(ii) at least one hydrophilic group selected from an ethylene glycol group and polyethylene glycol groups having at least 2 ethylene glycol units, and
(iii) at least one photoreactive group, the photoreactive group being a photoenolizable carbonyl group.

2. The polymer according to claim 1, wherein the radically polymerizable C-C double bond is part of an acrylate or methacrylate group.

3. The polymer according to either of the preceding claims, wherein the hydrophilic group is a group having 2 to 30, preferably 3 to 30, ethylene glycol groups.

4. The polymer according to any of the preceding claims, wherein the photoreactive group is a photoenolizable alpha-aryl-carbonyl group.

5. The polymer according to any of the preceding claims, wherein the photoreactive group derives from a structural unit of the formula 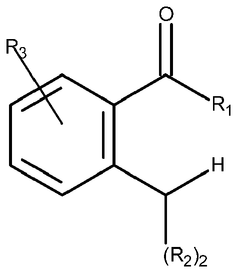 where R₁ is hydrogen or an organic radical, R₂ is hydrogen or an organic radical, and R₃ stands for substituents of the aromatic ring which are identical to or different from one another and may be joined to one another via one or more ring structures.

6. The polymer according to any of the preceding claims, wherein the photoreactive monomer is selected from compounds having the structure 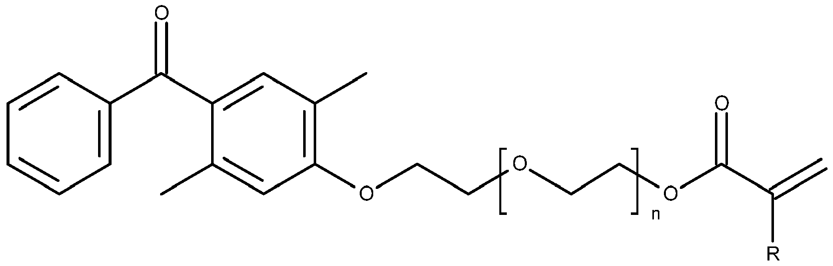 where n is a number from 0 to 29, preferably from 4 to 19, and R is hydrogen or methyl,
or from compounds having the structure 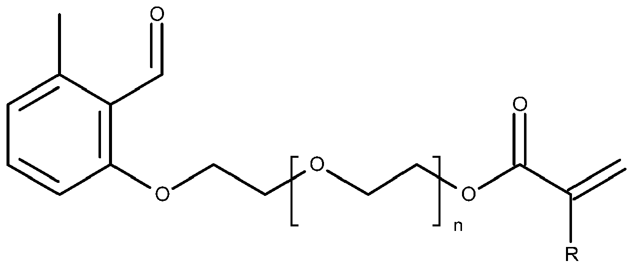 where n is a number from 0 to 19, preferably 1 to 9, and R is hydrogen or methyl.

7. The polymer according to any of the preceding claims, wherein the polymer is a homopolymer or wherein the polymer is a copolymer, in which the photoreactive monomer is used at not less than 0.1 wt%, preferably at 0.2 to 40 wt%, based on the sum total of all the monomers.

8. The polymer according to any of the preceding claims, wherein the polymer is a copolymer, the photoreactive monomer being copolymerized with at least one further monomer selected from C1 to C20 alkyl (meth)acrylates, C1 to C20 hydroxyalkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, acid monomers, or mixtures of these monomers.

9. The polymer according to the preceding claim, wherein the further monomers are used in an amount of 60 to 99.9%, and the photoreactive monomers are used in an amount of 0.1 to 40 wt%.

10. An aqueous composition comprising at least one polymer according to any of the preceding claims in water, in dissolved or dispersed form.

11. The composition according to the preceding claim, wherein the composition further comprises at least one compound having at least one electron-deficient double bond.

12. The composition according to the preceding claim, wherein the compound has at least two electron-deficient double bonds.

13. The composition according to either of claims 11 and 12, wherein the compound is selected from compounds having structural units derived from maleic acid, maleic anhydride, fumaric acid, maleimides, maleic monoesters or diesters, fumaric monoesters or diesters, acrylic esters, acrylamides, itaconic esters.

14. A crosslinked polymer preparable from a polymer according to any of claims 1 to 9 by photoinduced crosslinking with a compound having at least two electron-deficient double bonds.

15. A process for preparing crosslinked polymers, where at least one polymer according to any of claims 1 to 9 and also at least one compound having at least two electron-deficient double bonds are provided and photochemical crosslinking is carried out.

16. The process according to the preceding claim, wherein the polymer is prepared by emulsion polymerization.

17. The use of polymers according to any of claims 1 to 9 for adhesives, coatings, paints, varnishes, inks, thickeners, tackifier resins, protective colloids, and dispersants.

## Revendications

1. Polymère photoréactif, pouvant être fabriqué par polymérisation radicalaire en utilisant au moins un monomère photoréactif,
le monomère photoréactif comprenant :
(i) au moins une double liaison C-C polymérisable par voie radicalaire,
(ii) au moins un groupe hydrophile choisi parmi un groupe éthylène glycol et des groupes polyéthylène glycol contenant au moins 2 unités éthylène glycol, et
(iii) au moins un groupe photoréactif, le groupe photoréactif étant un groupe carbonyle photo-énolisable.

2. Polymère selon la revendication 1, **caractérisé en ce que** la double liaison C-C polymérisable par voie radicalaire fait partie d'un groupe acrylate ou méthacrylate.

3. Polymère selon l'une quelconque des revendications précédentes, **caractérisé en ce que** le groupe hydrophile est un groupe contenant 2 à 30, de préférence 3 à 30 groupes éthylène glycol.

4. Polymère selon l'une quelconque des revendications précédentes, **caractérisé en ce que** le groupe photoréactif est un groupe alpha-aryl-carbonyle photo-énolisable.

5. Polymère selon l'une quelconque des revendications précédentes, **caractérisé en ce que** le groupe photoréactif est dérivé d'une unité structurale de formule 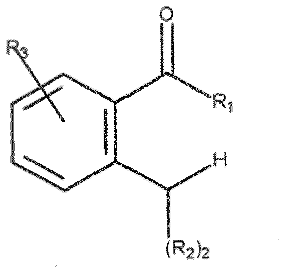 dans laquelle R₁ représente hydrogène ou un radical organique, R₂ représente hydrogène ou un radical organique, et R₃ représente des substituants du cycle aromatique, qui sont identiques ou différents et qui peuvent être reliés les uns avec les autres par une ou plusieurs structures cycliques.

6. Polymère selon l'une quelconque des revendications précédentes, **caractérisé en ce que** le monomère photoréactif est choisi parmi les composés de structure 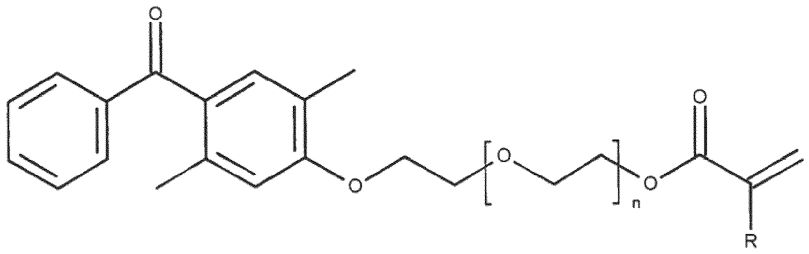 dans laquelle n signifie un nombre de 0 à 29, de préférence de 4 à 19, et R signifie hydrogène ou méthyle,
ou les composés de structure 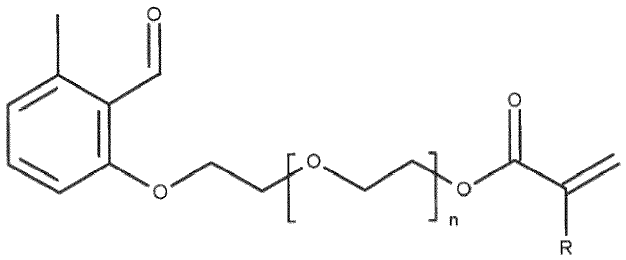 dans laquelle n signifie un nombre de 0 à 19, de préférence de 1 à 9, et R signifie hydrogène ou méthyle.

7. Polymère selon l'une quelconque des revendications précédentes, **caractérisé en ce que** le polymère est un homopolymère ou **en ce que** le polymère est un copolymère, le monomère photoréactif étant utilisé à hauteur d'au moins 0,1 % en poids, de préférence à hauteur de 0,2 à 40 % en poids, par rapport à la somme de tous les monomères.

8. Polymère selon l'une quelconque des revendications précédentes, **caractérisé en ce que** le polymère est un copolymère, le monomère photoréactif étant copolymérisé avec au moins un autre monomère choisi parmi les (méth)acrylates d'alkyle en C1 à C20, les (méth)acrylates d'hydroxyalkyle en C1 à C20, les esters de vinyle d'acides carboxyliques contenant jusqu'à 20 atomes C, les composés aromatiques de vinyle contenant jusqu'à 20 atomes C, les nitriles éthyléniquement insaturés, les halogénures de vinyle, les éthers de vinyle d'alcools contenant 1 à 10 atomes C, les hydrocarbures aliphatiques contenant 2 à 8 atomes C et une ou deux doubles liaisons, les monomères acides ou les mélanges de ces monomères.

9. Polymère selon la revendication précédente, **caractérisé en ce que** les autres monomères sont utilisés en une quantité de 60 à 99,9 % et les monomères photoréactifs sont utilisés en une quantité de 0,1 à 40 % en poids.

10. Composition aqueuse, contenant au moins un polymère selon l'une quelconque des revendications précédentes dans de l'eau sous forme dissoute ou dispersée.

11. Composition selon la revendication précédente, **caractérisée en ce que** la composition contient en outre au moins un composé contenant au moins une double liaison pauvre en électrons.

12. Composition selon la revendication précédente, **caractérisée en ce que** le composé comprend au moins deux doubles liaisons pauvres en électrons.

13. Composition selon l'une quelconque des revendications 11 à 12, **caractérisée en ce que** le composé est choisi parmi les composés contenant des unités structurales qui sont dérivées d'acide maléique, d'anhydride de l'acide maléique, d'acide fumarique, de maléimide, d'un mono- ou diester de l'acide maléique, d'un mono- ou diester de l'acide fumarique, d'un ester acrylique, d'acrylamide, d'un ester de l'acide itaconique.

14. Polymère réticulé, pouvant être fabriqué à partir d'un polymère selon l'une quelconque des revendications 1 à 9, par réticulation photo-induite avec un composé contenant au moins deux doubles liaisons pauvres en électrons.

15. Procédé de fabrication de polymères réticulés, selon lequel au moins un polymère selon l'une quelconque des revendications 1 à 9 et au moins un composé contenant au moins deux doubles liaisons pauvres en électrons sont mis à disposition et réticulés photochimiquement.

16. Procédé selon la revendication précédente, **caractérisé en ce que** le polymère est fabriqué par polymérisation en émulsion.

17. Utilisation de polymères selon l'une quelconque des revendications 1 à 9 pour des adhésifs, des revêtements, des peintures, des vernis, des encres, des épaississants, des résines collantes, des colloïdes protecteurs et des dispersants.
